# EUROPÄISCHE PATENTANMELDUNG

(11) **EP 0 741 167 A2**
(43) Veröffentlichungstag der Anmeldung: **06.11.1996**
(21) Anmeldenummer: 96106613.1
(22) Anmeldetag: 26.04.1996
(51) Int. Cl.: C08L 83/04, C08K 5/29, C08K 5/54

(54) **Lagerstabile alkoxyvernetzende RTV1-Systeme**

(30) Priorität: 02.05.1995 DE 19515947
(71) Anmelder: Hüls Silicone Gesellschaft mit beschränkter Haftung, D-01610 Nünchritz (DE)
(72) Erfinder: Scheim, Uwe, Dr. rer. nat., 01640 Coswig (DE)
(74) Vertreter: Zöllner, Gudrun

(57) **Zusammenfassung**

Die Erfindung betrifft lagerstabile, alkoxyvernetzende RTV1-Systeme, welche als Stabilisatoren Carbodiimide enthalten.

## Beschreibung

Die Erfindung betrifft lagerstabile, alkoxyvernetzende RTV1-Systeme, welche als Stabilisatoren Carbodiimide enthalten.

Unter Ausschluß von Wasser lagerfähige, bei Zutritt von Wasser bei Raumtemperatur zu Elastomeren vulkanisierende Einkomponenten-Siliconkautschukmischungen (RTV1) sind bekannt. Sie enthalten im allgemeinen ein polymeres, meist lineares Siloxan, eine vernetzend wirkende Verbindung, die leicht hydrolysierbare Gruppen enthalten muß, einen Weichmacher, der meist ein methylterminiertes Polydimethylsiloxan ist, und ggf. weitere Zusätze wie Härtungsbeschleuniger, Pigmente, Verarbeitungshilfsmittel und Füllstoffe. Die Vulkanisation der Mischungen kann sauer, z. B. bei Anwesenheit von Acetoxysilanen, basisch, z. B. mittels Aminosilanen, oder neutral, z. B. durch Verbindungen, die Oximo- oder Alkoxygruppen aufweisen, erfolgen. Neutral vernetzende RTV1-Systeme werden vor allem dann benötigt, wenn die bei der Aushärtung der Mischungen entstehenden Spaltprodukte den Untergrund nicht beeinflussen sollen, beispielsweise beim Verfugen von Beton oder metallischen Werkstoffen.

Eine Verbindungsklasse der in den Siliconkautschuk-Mischungen verwendeten polymeren Siloxane, welche insbesondere für neutral vernetzende Systeme Anwendung finden, sind alkoxyterminierte Polyorganosiloxane.

Alkoxyvernetzende RTV1-Systeme haben gegenüber den herkömmlichen Systemen vielfältige Vorteile. So sind beispielsweise Carboxysilane enthaltende Systeme nicht neutralvernetzend und in Oximo- oder Benzamidosilane enthaltenden Systemen werden kostenintensive Vernetzer eingesetzt.

Bei der Lagerung von RTV1-Mischungen aller bekannten Vernetzungssysteme kommt es zu unerwünschten chemischen Reaktionen. Dabei erfolgt entweder, bedingt durch Feuchtigkeitsspuren, eine vorzeitige Vernetzung der Paste; d. h. die Mischung läßt sich nicht mehr aus dem Behältnis bzw. Gebinde pressen, oder es werden, bedingt durch OH-haltige Spaltprodukte, Äquilibrierungsreaktionen ausgelöst; d. h. die Mischung härtet überhaupt nicht mehr aus.

Während sich bekanntermaßen die vorzeitige Vernetzung durch einen Überschuß an Vernetzer verhindern läßt, ist das Problem der Äquilibrierung und damit der Unbrauchbarkeit der Mischung bisher nur unbefriedigend gelöst. Durch Hydrolyse des Vernetzers in Gegenwart von Feuchtigkeit aus der Luft oder aus den Füllstoffen ist in den Mischungen stets Alkohol vorhanden. Bei deren Lagerung kommt es, bedingt durch den Alkohol und unter Mitwirkung des Vernetzungskatalysators zur unerwünschten Äquilibrierung. Dabei werden Si-O-Bindungen gespalten und neu geknüpft und es entstehen Verbindungen, die Monoalkoxydiorgano-Endgruppen enthalten. Sind zu viele dieser nicht mehr vernetzend wirkenden Endgruppen vorhanden, so ergeben sich sehr weiche Vulkanisate mit unzureichenden Zugfestigkeiten bzw. die Mischungen härten bei der Anwendung nicht mehr aus.

Zur Beseitigung dieser Mängel können Vernetzungskatalysatoren zugesetzt werden, welche die Äquilibrierungsreaktion nicht katalysieren, wie beispielsweise die Verwendung von Titanchelaten. Da Titanchelate jedoch immer gefärbt sind, ist es insbesondere bei transparenten Formulierungen schwierig, farblose Produkte zu erhalten.

Bei Verwendung der üblichen Zinnverbindungen (Dibutylzinndiacetat, -dilaurat oder -oxid) als Vernetzungskatalysatoren ist der Zusatz einer stabilisierend wirkenden Verbindung, die sowohl Wasser als auch Alkohol unter Bildung unschädlicher Spaltprodukte bindet und damit der Äquilibrierung entgegenwirkt, notwendig. Beschrieben wurde der Zusatz von Silazanen, insbesondere Hexamethyldisilazan (EP 104 179), oder von silylsubstituierten Carbonsäureestern (EP 579 208, EP 604 086). Der Zusatz beider Verbindungsgruppen weist Nachteile auf. Hexamethyldisilazan spaltet Ammoniak ab. Damit zeigen die Pasten keine neutrale Reaktion mehr. Die geeigneten silylsubstituierten Carbonsäureester sind meist nur in mäßigen Ausbeuten zugänglich und reagieren außerdem nur langsam mit den zu beseitigenden Verbindungen zu unschädlichen Produkten.

Die Aufgabe der Erfindung bestand daher darin, alkoxyvernetzende RTV1-Systeme bereitzustellen, die eine gute Stabilität der Mischungen gewährleisten, Äquilibrierungen unterdrücken und mit genügend hoher Geschwindigkeit und klebfrei aushärten.

Gegenstand der Erfindung sind lagerstabile, alkoxyvernetzende RTV1-Systeme, die erhalten werden durch Vermischen von dialkoxyalkylsiloxy- und/oder trialkoxysiloxyterminierten Polyorgano-siloxanen, Vernetzer, Weichmacher, Katalysator, Füllstoffen, ggf. anderen bekannten Zusätzen sowie Stabilisatoren, dadurch gekennzeichnet, daß als Stabilisator mindestens ein Carbodiimid der allgemeinen Formel

R-N=C=N-R (I)

enthalten ist, wobei R unabhängig voneinander substituierte und/oder unsubstituierte Alkyl-, Aryl- oder Silylreste bedeutet.

Im Carbodiimid der allgemeinen Formel (I) sind als Reste R Cyclohexyl- oder silylsubstituierte Alkylreste der allgemeinen Formel

-(CH₂)ₓSiR¹_{y}(OR²)_{3-y} (II)

bevorzugt, wobei x und y Werte von 0 bis 3 annimmt und R¹ sowie R² gleiche oder verschiedene, gegebenenfalls substituierte Alkylreste bedeuten. Besonders bevorzugt sind Trimethylsilyl- und 3-Trimethoxysilylpropylreste.

Die erfindungsgemäßen Carbodiimide lassen sich leicht nach bekannten Verfahren aus Harnstoffderivaten, Isocyanaten oder Isothiocyanaten herstellen. Sie reagieren schnell mit Wasser oder Alkoholen, wobei die gleichen Katalysatoren, die später in der Kautschukmischung für die Vernetzung verwendet werden, diese Reaktion ebenfalls katalysieren und eingesetzt werden können.

Geeignete kommerziell erhältliche Carbodiimide sind beispielsweise Dicyclohexylcarbodiimid und Bis(trimethylsilyl)carbodiimid.

Bisher wurden Carbodiimide als Hydrolyseschutzmittel, Thermostabilisatoren und Alterungsschutzmittel in Polyurethanen eingesetzt. Darüber hinaus dienen sie als Kondensationsmittel bei Peptidsynthesen. In EP 500 010 wird Dicyclohexylcarbodiimid als Trocknungsmittel für mit Alkoxysilanen gepfropftes Polyethylen beschrieben, um eine Vorvernetzung aufgrund des Vorhandenseins von Wasser zu verhindern.

Die Carbodiimide werden der Mischung bevorzugt in Mengen von 0,01 Gew.-% bis 10 Gew.-%, bezogen auf die Gesamtmischung, zugesetzt.

Alkoxyvernetzende RTV1-Siliconkautschukmischungen enthalten als übliche Bestandteile:
(i) 30 bis 90 Gew.-% mindestens eines durch Kondensation vernetzbaren, alkoxyterminierten Polydiorganosiloxanes der allgemeinen Formel

   (R⁴O)₃₋ₙR³ₙSiO(SiR³₂O)ₘSiR³ₙ(OR⁴)₂₋ₙ (III),

   worin R³ unabhängig voneinander Alky- Alkenyl- und/oder Arylreste sowie R⁴ Alkylreste darstellen, n entweder 0 oder 1 ist und m Werte von 20 bis 2000 annimmt,
(k) 0,5 bis 5 Gew.-% mindestens einer vernetzend wirkenden siliciumorganischen Verbindung der allgemeinen Formel

   R⁵ₖSiX₄₋ₖ (IV),

   worin R⁵ ein substituierter oder unsubstituierter, gesättigter oder ungesättigter, einwertiger Kohlenwasserstoffrest mit 1 bis 6 Kohlenstoffatomen und X eine hydrolysierbare Gruppe bedeuten sowie k entweder 0 oder 1 ist, und/oder deren partiellen Kondensate,
(l) 0,01 bis 3 Gew.-% mindestens einer die Hydrolyse und Kondensation der Komponenten (i) und (k) katalysierenden Verbindung,
(m) 0,01 Gew.-% bis 10 Gew.-%, bevorzugt 0,1 bis 2 Gew.-%, eines Carbodiimids,
(n) 1 bis 50 Gew.-% mindestens eines behandelten und/oder unbehandelten Füllstoffes sowie ggf.
(o) weitere bekannte Zusätze.

Die alkoxyterminierten Polyorganosiloxane (i) werden beispielsweise erhalten durch Umsetzung von mindestens einem hydroxyterminierten Polydiorganosiloxan mit mindestens einem Alkoxysilan, wie beispielsweise Methyltrimethoxysilan, in Gegenwart eines Katalysators, üblicherweise einer Base oder Lewissäure. Während der dabei stattfindenden Kondensation (Abspaltung von Alkohol) wird das gewünschte Polymer gebildet. Üblicherweise werden für diese Umsetzung wegen der leichten Verfügbarkeit im technischen Maßstab und der höchsten Reaktivität α,ω-Dihydroxypolydimethylsiloxane eingesetzt.

Beispiele für die vernetzend wirkende siliciumorganische Verbindung (k) sind Methyltrimethoxysilan, Vinyltriethoxysilan, Tetrakis-(2-methoxyethoxy)silan, Tetrapropoxy-, -ethoxy- oder -methoxysilan. Vorteilhafterweise wird der Vernetzer im Überschuß zugesetzt, mindestens etwa das 5-fache der stöchiometrisch notwendigen Menge.

Als die Hydrolyse und Kondensation der Komponenten (i) und (k) katalysierende Verbindungen (l) werden üblicherweise organische Zinn- oder Titanverbindungen eingesetzt, wie beispielsweise Dialkylzinnverbindungen oder Titanchelate. Am meisten verwendet wird Dibutylzinndilaurat.

Die Füllstoffe (n) werden der Siliconkautschukmischung zur Erzielung bestimmter mechanischer Eigenschaften zugesetzt. Verwendet werden dabei solche mit hoher spezifischer Oberfläche, wie beispielsweise pyrogene Kieselsäure oder gefälltes Calciumcarbonat. Darüber hinaus können weitere Füllstoffe mit geringer spezifischer Oberfläche als Extender verwendet werden. Bevorzugt ist hierbei gemahlenes Calciumcarbonat.

Weitere Zusatzstoffe (o) können u. a. sein:
- Weichmacher, wie trimethylsilylterminierte Polydimethylsiloxane mit Viskositäten zwischen 0,1 und 1 Pas oder organische Verbindungen, z. B. bestimmte Mineralöle
- weitere Stabilisatoren,
- Pigmente,
- Fungizide
- Haftvermittler, wie beispielsweise Aminopropyltriethoxysilan und/oder Glycidoxypropyltrimethoxysilan oder Silane mit mehreren Amino- oder weiteren Alkoxygruppen bzw. Silane mit anderen funktionellen Resten; üblicherweise werden 0,02 bis 5 Gew.-% Haftvermittler eingesetzt

Auf Basis der Komponenten (i) bis (o) können die gewünschten Einkomponenten-Siliconkautschukmischungen formuliert werden, wobei die Mischungsherstellung diskontinuierlich oder kontinuierlich nach bekannten Verfahren erfolgt.

Es war überraschend, daß sich die Carbodiimide der allgemeinen Formel (I) hervorragend als Stabilisatoren für RTV1-Systeme eignen und die Äquilibrierung über einen langen Zeitraum unterdrücken. Ohne den Zusatz dieser Verbindungen härten die Siliconkauschukmischungen nicht mehr aus und sind damit nicht mehr gebrauchsfähig. Mit Zusatz des erfindungsgemäßen Stabilisators werden hochqualitative RTV1-Systeme erhalten, die eine ausgezeichnete Lagerstabilität aufweisen.

### Ausführungsbeispiele

### Herstellung der RTV1-Grundmischung

Aus 100 Gew.-Teilen eines α,ω-Bis(dimethoxymethylsiloxy)polydimethylsiloxanes mit einer Viskosität von 75 Pas, 17 Gew.-Teilen eines methylterminierten Polydimethylsiloxanes mit einer Viskosität von 0,1 Pas, 12 Gew.-Teilen einer pyrogenen Kieselsäure mit einer BET-Oberfläche von 150 m²/g, 3 Gew.-Teilen Methyltrimethoxysilan und 0,3 Gew.-Teilen Aminoethylaminopropyltrimethoxysilan wurde eine RTV1-Grundmischung formuliert, die in den nachfolgenden Beispielen mit unterschiedlichen Katalysator-Stabilisator-Mischungen versetzt wurde. Die Grundmischung enthielt ca. 0,4 Gew.-% Methanol (gaschromatografische Untersuchung). Die Lagerstabilität der Pasten wurde durch eine Lagerung des unvernetzten Produktes bei 100 °C über 24 Stunden getestet. Wenn das Produkt nach dieser Behandlung noch klebfrei aushärtet, ist eine Lagerstabilität von einem Jahr bei Raumtemperatur gewährleistet.

### Beispiel 1

100 Gew.-Teile der RTV1-Grundmischung wurden mit 0,23 Gew.-Teilen Dibutylzinndiacetat und zusätzlich noch mit 2,7 Gew.-Teilen Dicyclohexylcarbodiimid versetzt. Nach 24 Stunden Lagerung dieser Mischung bei 100 °C härtete das Produkt zu einem klebfreien Elastomer aus.

### Beispiel 2

100 Gew.-Teile der RTV1-Grundmischung wurden mit 0,23 Gew.-Teilen Dibutylzinndiacetat und zusätzlich noch mit 1,4 Gew.-Teilen Dicyclohexylcarbodiimid versetzt. Nach 24 Stunden Lagerung dieser Mischung bei 100 °C härtete das Produkt zu einem klebfreien Elastomer aus.

### Beispiel 3

100 Gew.-Teile der RTV1-Grundmischung wurden mit 0,23 Gew.-Teilen Dibutylzinndiacetat und zusätzlich noch mit 0,8 Gew.-Teilen Bis(trimethylsilyl)carbodiimid versetzt. Nach 24 Stunden Lagerung dieser Mischung bei 100 °C härtete das Produkt zu einem klebfreien Elastomer aus.

### Beispiel 4

100 Gew.-Teile der RTV1-Grundmischung wurden mit 0,23 Gew.-Teilen Dibutylzinndiacetat und zusätzlich noch mit 2,4 Gew.-Teilen Diphenylcarbodiimid versetzt. Nach 24 Stunden Lagerung dieser Mischung bei 100 °C härtete das Produkt zu einem klebfreien Elastomer aus.

### Beispiel 5

100 Gew.-Teile der RTV1-Grundmischung nach Beispiel 1, die jedoch nur 1 Gew.-Teil Methyltrimethoxysilan enthielt, wurden mit 0,23 Gew.-Teilen Dibutylzinndiacetat und zusätzlich noch mit 4,6 Gew.-Teilen Bis(3-trimethoxysilylpropyl)carbodiimid versetzt. Nach 24 Stunden Lagerung dieser Mischung bei 100 °C härtete das Produkt zu einem klebfreien Elastomer aus.

### Vergleichsbeispiel V1 - ohne Stabilisator

100 Gew.-Teile der RTV1-Grundmischung wurden mit 0,23 Gew.-Teilen Dibutylzinndiacetat versetzt. Es erfolgte keine Zugabe eines erfindungsgemäßen Stabilisators. Nach 24 Stunden Lagerung bei 100 °C trat keine Aushärtung mehr ein. Das Produkt blieb pastös.

### Vergleichsbeispiel V2 - ohne Vernetzer

100 Gew.-Teilen der RTV1-Grundmischung, die jedoch keinen Vernetzer enthielt, wurden mit 0,3 Gew.-Teilen Dibutylzinndilaurat und 3,5 Gew.-Teilen Dicyclohexylcarbodiimid versetzt und in Kartuschen abgefüllt. Nach einer Lagerung der Pasten bei 100 °C über 24 Stunden war das Produkt geliert und konnte nicht mehr aus der Katusche gepreßt werden.

**Tabelle 1**

| Beispiel | | Spannung bei 100 % Dehnung (MPa) | Zugfestigkeit (MPa) | Reißdehnung (%) | Härte (Sh-A) |
|---|---|---|---|---|---|
| 1 | (A) | 0,35 | 1,30 | 486 | 17 |
| | (B) | 0,30 | 1,28 | 512 | 14 |
| 2 | (A) | 0,35 | 1,30 | 460 | 17 |
| | (B) | 0,28 | 1,23 | 605 | 12 |
| 3 | (A) | 0,36 | 1,25 | 460 | 17 |
| | (B) | 0,29 | 1,31 | 580 | 13 |
| 4 | (A) | 0,36 | 1,28 | 465 | 17 |
| | (B) | 0,30 | 1,23 | 525 | 15 |
| 5 | (A) | 0,39 | 1,40 | 410 | 19 |
| | (B) | 0,32 | 1,20 | 580 | 16 |
| V1 | (A) | 0,38 | 1,23 | 450 | 17 |
| | (B) | --- | --- | --- | --- |
| V2 | (A) | 0,38 | 1,45 | 470 | 15 |
| | (B) | --- | --- | --- | --- |

Tabelle 1 zeigt die mechanischen Kennwerte der nach den Beispielen 1 bis 5 sowie V1 und V2 erhaltenen Vulkanisate (Probekörper entsprechend DIN 53504 S2; hergestellt nach 7 Tagen Härtung bei 23 °C und 50 % relativer Luftfeuchtigkeit). Die Kennwerte (A) wurden nach etwa 24 stündiger Lagerung bei Raumtemperatur, die Kennwerte (B) nach Lagerung über 24 h bei 100 °C ermittelt.

Am gemäß Vergleichsbeispiel V1 (ohne Stabilisator) erhaltenen Produkt konnten die Kennwerte (B) aufgrund der pastösen Konsistenz nicht gemessen werden.
Am gemäß Vergleichsbeispiel V2 (ohne Vernetzer) erhaltenen Produkt konnten die Kennwerte (B) aufgrund der vorzeitigen Aushärtung nicht gemessen werden.

## Patentansprüche

1. Lagerstabile alkoxyvernetzende RTV1-Systeme, erhalten durch Vermischen von dialkoxyalkylsiloxy- und/oder trialkoxysiloxyterminierten Polyorganosiloxanen, Vernetzer, Weichmacher, Katalysator, Füllstoffen, ggf. anderen bekannten Zusätzen sowie Stabilisatoren, dadurch gekennzeichnet, daß als Stabilisator mindestens ein Carbodiimid der allgemeinen Formel
R-N=C=N-R (I)
enthalten ist, wobei R unabhängig voneinander substituierte und/oder unsubstituierte Alkyl-, Aryl- oder Silylreste bedeutet.

2. RTV1-Systeme nach Anspruch 1, dadurch gekennzeichnet, daß der Rest R ein silylsubstituierter Alkylrest der allgemeinen Formel
-(CH₂)ₓSiR¹_{y}(OR²)_{3-y} (II)
ist, wobei x und y Werte von 0 bis 3 annimmt und R¹ sowie R² gleiche oder verschiedene, gegebenenfalls substituierte Alkylreste bedeuten.

3. RTV1-Systeme nach Anspruch 1, dadurch gekennzeichnet, daß der Rest R Cyclohexyl ist.

4. RTV1-Systeme nach Anspruch 1, dadurch gekennzeichnet, daß das Cabodiimid in Mengen von 0,01 Gew.-% bis 10 Gew.-%, bezogen auf die Gesamtmischung, enthalten sind.
